# EUROPEAN PATENT APPLICATION

(11) **EP 3 296 339 A1**
(43) Date of publication of application: **21.03.2018**
(21) Application number: 16188710.4
(22) Date of filing: 14.09.2016
(51) Int. Cl.: C08G 18/32, C08G 18/76, C08J 5/04

(54) **THERMOPLASTIC PUR WITH HIGH TG FOR REACTION TRANSFER MOLDING (RTM)**

(71) Applicant: Henkel AG & Co. KGaA, 40589 Düsseldorf (DE)
(72) Inventor: FERENCZ, Andreas, 40223 Düsseldorf (DE); SCHMIDT, Tamara, 46049 Oberhausen (DE); NIEGEMEIER, Andreas, 40235 Düsseldorf (DE); LAMMERSCHOP, Olaf, 47802 Krefeld (DE)

(57) **Abstract**

The invention relates to a thermoplastic polyurethane matrix resin composition, comprising (i) at least one bridged and/or fused and/or spiro polycyclic alcohol compound; (ii) at least one polyisocyanate; and (iii) at least one diol, which is different from the at least one bridged and/or fused and/or spiro polycyclic alcohol compound (i). The at least one bridged and/or fused and/or spiro polycyclic alcohol compound (i) is present in the thermoplastic polyurethane matrix resin composition in an amount of at least 10 wt.-% by weight, preferably at least 20 wt.-%, most preferably at least 25 wt.-%. Furthermore, the present invention relates to a fiber-reinforced composite comprising a cured thermoplastic polyurethane polymer matrix according to the present invention and a fiber material. Moreover, a method for the manufacture of the fiber-reinforced composite according to the present invention and use of the composition or the fiber-reinforced composite in railway vehicles, automotive vehicles, aircraft vehicles, boats, space vehicles, motorbikes, bicycles, sporting goods, e.g., skis, snowboards, rackets, golf clubs, fishing rods, baseball bats, hockey sticks, arrows, archery bows, surfboards, javelins, exercise equipment, cell phone and laptop housings, helmets, functional clothing, shoes, construction parts in bridges and buildings or wind turbine blades are described.

## Description

The invention relates to a thermoplastic polyurethane matrix resin composition, comprising (i) at least one bridged and/or fused and/or spiro polycyclic alcohol compound; (ii) at least one polyisocyanate; and (iii) at least one diol, which is different from the at least one bridged and/or fused and/or spiro polycyclic alcohol compound (i). The at least one bridged and/or fused and/or spiro polycyclic alcohol compound (i) is present in the thermoplastic polyurethane matrix resin composition in an amount of at least 10 wt.-% by weight, preferably at least 20 wt.-%, most preferably at least 25 wt.-%. Furthermore, the present invention relates to a fiber-reinforced composite comprising a cured thermoplastic polyurethane polymer matrix according to the present invention and a fiber material. Moreover, a method for the manufacture of the fiber-reinforced composite according to the present invention and use of the composition or the fiber-reinforced composite in railway vehicles, automotive vehicles, aircraft vehicles, boats, space vehicles, motorbikes, bicycles, sporting goods, helmets, functional clothing, shoes, construction parts in bridges and buildings or wind turbine blades are described.

Fiber-reinforced composites (FRC) contain a fiber material embedded in a cured matrix resin. Since the finished part shall be persistent to high mechanical stresses, the employed matrix forming resin should be firmly connected with the fiber material after curing to avoid defects in the fiber-reinforced composite. Usually, thermosetting matrix resins are employed in the production of fiber-reinforced composites, which usually exhibit extremely high reactivity, leading to an increased generation of heat during curing, which can impair the properties of the fiber material. Thermosets also exhibit a limited storage life at room temperature. Moreover, compositions on the basis of thermosetting matrices require due to the curing time a prolonged manufacturing process. Moreover, post-cure modifications in shape of the resulting composite thermoset materials is possible only by the removal of the material. On the other hand, layers of fiber materials treated with thermoplastic matrices typically tend to show an undesirable tackiness, which can lead to problems during storage.

Therefore, it is an object of the present invention to provide an improved thermoplastic polyurethane matrix resin composition, which addresses the aforementioned needs, in particular provides a short manufacturing process (high Tg, yet meltable) and good mechanical properties (high stiffness).

In this regard, it has been surprisingly found by the present inventors that the thermoplastic polyurethane matrix resin composition provides improved stiffening characteristics and a high glass transition temperature (Tg).

In the present specification, the terms "a" and "an" and "at least one" are the same as the term "one or more" and can be employed interchangeably.

The term "essentially free" within the context of this invention is to be interpreted as the respective compound is contained in the composition in an amount of less than 5 wt.-%, 4 wt.-%, 3 wt.-%, 2 wt.-%, 1.5 wt.-%, 1 wt.-%, 0.75 wt.-%, 0.5 wt.-%, 0.25 wt.-%, or 0.1 wt.-%, based on the total weight of the composition, wherein the amounts are respectively more preferred in descending order. For example, 4 wt.-% is more preferred than 5 wt.-% and 3 wt.-% is more preferred than 4 wt.-%.

The terms "resin" or "matrix resin" is to be interpreted as "two-component polyurethane matrix resin" unless explicitly stated otherwise.

In the present invention the molar ratio of the isocyanate (NCO) groups of the at least one polyisocyanate (ii) to the sum of the hydroxyl (OH) groups of the at least one bridged and/or fused and/or spiro polycyclic alcohol compound (i) and the at least one diol (iii), which is different from the at least one bridged alcohol bridged and/or fused and/or spiro polycyclic alcohol compound is also referred to as NCO:OH unless explicitly stated otherwise.

In particular, the present invention relates to a thermoplastic polyurethane matrix resin composition, comprising
(i) at least one bridged and/or fused and/or spiro polycyclic alcohol compound;
(ii) at least one polyisocyanate; and
(iii) at least one diol, which is different from the at least one bridged and/or fused and/or spiro polycyclic alcohol compound (i);
wherein the at least one bridged and/or fused and/or spiro polycyclic alcohol compound (i) is present in the thermoplastic polyurethane matrix resin composition in an amount of at least 10 wt.-% by weight, preferably at least 20 wt.-%, most preferably at least 25 wt.-%.

Furthermore, the invention relates to fiber-reinforced composite comprising a cured thermoplastic polyurethane matrix resin composition according to the present invention and a fiber material, characterized in that fiber material is contained in proportions of more than 30% by volume based on the total volume of said fiber-reinforced composite.

Moreover, the invention relates to a method for the manufacture of fiber-reinforced composites according to the present invention, comprising the steps:
1) providing an external mold comprising the fiber material;
2) introducing the thermoplastic polyurethane matrix resin composition according to the present invention into said mold under pressure and/or vacuum; and
3) curing said composition at a temperature of up to 140 °C, preferably from 60 to 120 °C.

In addition to that, the present invention also relates to the use of the composition according to the present invention or the fiber-reinforced composite according to the present invention in railway vehicles, automotive vehicles, aircraft vehicles, boats, space vehicles, motorbikes, bicycles, sporting goods, helmets, functional clothing, shoes, construction parts in bridges and buildings or wind turbine blades.

Further preferred embodiments of the invention are set out in the claims.

The thermoplastic polyurethane matrix resin composition according to the invention comprises
(i) at least one bridged and/or fused and/or spiro polycyclic alcohol compound;
(ii) at least one polyisocyanate; and
(iii) at least one diol which, is different from the at least one bridged and/or fused and/or spiro polycyclic alcohol compound (i).

The at least one bridged and/or fused and/or spiro polycyclic alcohol compound according to item (i) of the thermoplastic polyurethane matrix resin composition according to the present invention is an alcohol compound that comprises at least one, preferably at least two alcohol functions and a stiff hydrocarbon backbone of at least 6 carbon atoms, preferably at least 9 carbon atoms. According to the present invention, the at least one bridged and/or fused and/or spiro polycyclic alcohol compound contains at least one, preferably at least two hydroxyl groups per molecule. In preferred embodiments, the number of hydroxyl groups per molecule is in a range having any combination of a lower limit selected from 2, 3 and an upper limit of 8, 7, 6, 5. In more preferred embodiments, the number of hydroxyl groups per molecule is from 2 to 5. According to the present invention, the term "stiff hydrocarbon backbone" refers to a hydrocarbon function, which comprises at least two cyclic hydrocarbon functions with two or more hydrocarbon cycles (rings) sharing one or more carbon atoms. It is preferred, that the "stiff hydrocarbon backbone" is a hydrocarbon function, which comprises at least two cyclic hydrocarbon functions containing a "bridge", wherein said bridge is a single atom, an unbranched chain of atoms or a valence bond that connects two "bridgehead" atoms. The bridgehead atoms are defined as any atom that is not a hydrogen atom, and that is part of the skeletal framework of the molecule that is bonded to three or more other skeletal atoms. Thus, the bridged and/or fused and/or spiro polycyclic alcohol compound according to the invention has two or more cyclic hydrocarbon cycles (rings) sharing one or more carbon atoms. This includes alcohols comprising a bridged polycyclic hydrocarbon function and/or a fused polycyclic hydrocarbon function and/or a spiro hydrocarbon function. In preferred embodiments the bridged and/or fused and/or spiro polycyclic alcohol compound according to item (i) is a bridged and/or fused polycyclic alcohol compound. In more preferred embodiments the bridged and/or fused and/or spiro polycyclic alcohol compound according to item (i) is a bridged and optionally fused polycyclic alcohol compound. In even more preferred embodiments, the bridged and/or fused and/or spiro polycyclic alcohol compound according to item (i) comprises a bicyclic or a tricyclic bridged and optionally fused polycyclic hydrocarbon function. The bicyclic, tricyclic, etc. hydrocarbon functions may be bicyclic, tricyclic, etc. bridged and/or fused and/or spiro polycyclic alkanes. However, the bicyclic, tricyclic, etc. hydrocarbon functions according to the present invention may be partially unsaturated, thus comprising one or more unsaturated carbon-carbon double or triple bonds, resulting in bicyclic, tricyclic, etc. bridged and/or fused and/or spiro polycyclic alkenes and alkynes, and may optionally comprise further substituents such as, without limitation, one or more alkane, alkene, or alkyne groups each comprising, for instance 1 to 10 carbon atoms. Suitable examples of bridged bicyclic hydrocarbon functions to be comprised in the at least one bridged and/or fused and/or spiro polycyclic alcohol compound according to item (i) of the thermoplastic polyurethane matrix resin composition according to the present invention include, without limitation, derivatives of bicyclic alkane compounds, such as bicyclo[2.2.1]heptane (norbornane), bicyclo[2.2.2]octane, bicyclo-[3.3.1]nonane, and bicyclo[3.3.3]undecane, and derivatives of bicyclic alkene compounds, such as bicyclo[2.2.1]hept-5-ene. Further examples suitable in the context of the present invention include 1,7,7-Trimethylbicyclo[2.2.1]heptane (bornane); 3,7,7-Trimethylbicyclo[4.1.0]heptane (carane); 3,7,7-Trimethylbicyclo[4.1.0]hept-3-ene (3-carene); 1,7,7-Trimethyl-bicyclo[2.2.1]heptan-2-on (camphor); 1,7,7-Trimethyl-bicyclo[2.2.1]heptan-2-ol (borneol); 4,7,7-Trimethyl-bicyclo[2.2.1]heptan-2-ol (isoborneol); 4,7,7-Trimethyl-bicyclo[2.2.1]heptan-2-ol (fenchone); 2,6,6-Trimethylbicyclo[3.1.1]heptane (dihydropinene); 2,6,6-Trimethylbicyclo-[3.1.1]hept-2-ene (α-pinene); 6,6-Dimethyl-2-methylenbicyclo-[3.1.1]heptane (β-Pinen); 4-Methyl-1-(propan-2-yl)bicyclo[3.1.0]hexan-3-on (thujone); Diclopentadien; Tetrahydrodiclopentadien; Tricyclo[3.3.1.13,7]decane (adamantane); Spiro[4.5]decane; Spiro[[5.5]undecane; and Dispiro[4.2.5.2]pentadecane.

According to certain embodiments of the present invention, the at least one bridged and/or fused and/or spiro polycyclic alcohol compound (i) is 4,8-bis(hydroxymethyl)tricyclo-[5.2.1.0^{2,6}]decane. In the context of the present invention, the compound 4,8-bis(hydroxymethyl)tricyclo-[5.2.1.0^{2,6}]decane may be a commercially available mixture of isomers of 4,8-bis(hydroxymethyl)tricyclo-[5.2.1.02,6]decane, as, for instance, purchasable from Sigma Aldrich®.

In a preferred embodiment, the at least one bridged and/or fused and/or spiro polycyclic alcohol compound has a viscosity of less than 20000 Pa•s, preferably from 12000 to 17000 Pa•s (DIN ISO 2555, Brookfield RVT, spindle No. 4, 25°C; 20 rpm).

According to the present invention, the thermoplastic polyurethane matrix resin composition contains the at least one bridged and/or fused and/or spiro polycyclic alcohol compound according to item (i) in an amount of at least 10 wt.-%, based on the total weight of the thermoplastic polyurethane matrix resin composition. In more preferred embodiments the at least one bridged and/or fused and/or spiro polycyclic alcohol compound according to item (i) is contained in an amount of at least 20 wt.-%, and in most preferred embodiments in an amount of at least 25 wt.-% .

As suitable monomeric isocyanates to be used in the thermoplastic polyurethane matrix resin composition, preferably isocyanates, which contain two or three NCO groups, are selected. They include well-known aliphatic, cyclo-aliphatic or aromatic monomeric diisocyanates. Preferably, isocyanates are selected with a molecular weight from 160 g/mol to 500 g/mol, for example aromatic polyisocyanates as the isomers of diphenylmethanediisocyanate (MDI), such as 4,4'-diphenylmethanediisocyanate (4,4'-MDI), 2,2'-diphenylmethane diisocyanate (2,2'-MDI), 2,4'-diphenylmethanediisocyanate (2,4'-MDI); the isomers of phenylenediisocyanate, such as 1,3-phenylenediisocyanate, 1,4-phenylenediisocyanate; naphthalene-1,5-diisocyanate (NDI), the isomers of toluenediisocyanate (TDI), such as 2,4-TDI and 2,6-TDI; m- and p-tetramethyl xylylene diisocyanate (TMXDI), m- and p- xylylenediisocyanate (XDI), 3,3'-dimethyldiphenyl-4,4'-diisocyanate (TODI), toluene diisocyanate, naphthalene, di- and tetraalkyl diphenylmethane diisocyanate, 4,4'-dibenzyl diisocyanate, and combinations thereof.

Aliphatic and cyclo-aliphatic isocyanates such as ethylene diisocyanate, dodecane diisocyanate, dimer fatty acid diisocyanate, 4,4'-dibenzyldiisocyanate, 1,6-diisocyanato-2,2,4-trimethylhexane, butane-1,4-diisocyanate, hexane-1,6-diisocyanate (HDI), tetramethoxybutane-1,4-diisocyanate, 1,12-diisocyanato-dodecane, 4,4'-dicyclohexylmethanediisocyanate, 1,3-cyclohexane or 1,4-cyclohexane diisocyanate, 1-methyl-2,4-diisocyanato-cyclohexane, 1-isocyanatomethyl-3-isocyanato-1,5,5-trimethylcyclohexane (isophorone diisocyanate, IPDI), hydrogenated or partly hydrogenated MDI ([H]12MDI (hydrogenated) or [H]6MDI (partly hydrogenated), and combinations thereof can also be used.

Preferably, diisocyanates with two NCO groups of different reactivity are selected from the group of the aromatic, aliphatic or cyclo-aliphatic diisocyanates. It is also possible to include at least partly oligomeric diisocyanates, such as allophanate, carbodiimide, isocyanurate, biuret condensation products from diisocyanates, e.g., from HDI, MDI, IPDI or other isocyanates. Polymeric MDI can also be employed. Mixtures of aliphatic or aromatic isocyanates can be used. More preferably, aromatic diisocyanates are used.

The viscosity of the at least one polyisocyanate (ii) is preferably less than 80 mPa•s, particularly preferably from 30 to 60 mPa•s (DIN ISO 2555, Brookfield RVT, spindle No. 3, 25°C; 50 rpm).

According to certain embodiments of the present invention, the at least one polyisocyanate according to item (ii) is selected from the group consisting of 4,4'-diphenylmethanediisocyante, 2,4-diphenylmethanediisocyante, polymeric 4,4'-diphenylmethanediisocyante, polymeric 2,4-diphenylmethanediisocyante, and mixtures of the aforementioned.

The thermoplastic polyurethane matrix resin composition contains in preferred embodiments the isocyanate from 1 to 80 wt.-%, based on the total weight of the thermoplastic polyurethane matrix resin composition. In more preferred embodiments isocyanate is contained from 20 to 75 wt.-% and in most preferred embodiments from 40 to 70 wt.-%. The average NCO functionality of the isocyanate is preferably at least 2, more preferably at least 2.05, even more preferably at least 2.1. In particular, it is preferred that the average NCO functionality of the isocyanate is in the range of from 2.0 to 2.3, more preferably from 2.05 to 2.2, even more preferably from 2.1 to 2.15.

The thermoplastic polyurethane matrix resin composition according to the present invention further comprise a diol (iii). Useable diols (iii) according to the invention preferably have a molecular weight of less than 250 g/mol and are well known to the skilled person. Exemplarily compounds are for example disclosed in Appendix 1 page 448 of "The Polyurethanes Handbook", editors David Randall and Steve Lee, John Wiley and Sons 2002. In preferred embodiments, the diol (iii) comprises alkane diols having at least two primary OH groups and/or alkane diols having at least two secondary OH groups and/or alkane diols having a primary and a secondary OH group. In more preferred embodiments, the diol comprises at least two vicinal OH groups and/or in case the OH groups are secondary OH groups the carbon atoms to which the OH groups are bound comprise no side chains except methyl groups. In exemplary embodiments, the diol (iii) is selected from 1,3-propane diol 1,4-butane diol, 1,6-hexane diol, 1,8-octane diol, 1,12-dodecane diol, cyclohexanedimethanol, hydrogenated bis-phenol A which can be substituted with alkyl, cycloalkyl, phenyl or ether groups, ethylene glycol, diethylene glycol, triethylene glycol, neopentyl glycol, dipropylene glycol, dibutylene glycol, 1,2-propanediol, 1,3-propanediol, 1,2-butanediol, 1,3-butanediol, 1,4-butanediol, 2,3-butanediol, 1,2-pentanediol, 1,3-pentanediol, 1,4-pentanediol, 2-methyl-1,3-propanediol, 2,2,4-trimethyl-1,3-pentanediol, 1,2-hexanediol, 1,3-hexanediol, 1,4-hexanediol, 1,5-hexanediol, 2-ethyl-1,3-hexanediol, 1,2-heptanediol, 1,3-heptanediol, 1,4-heptanediol, 1,5-heptanediol, 1,6-heptanediol, 1,2-octanediol, 1,3-octanediol, 1,4-octanediol, 1,5-octanediol, 1,6-octanediol, 1,7-octanediol, and combinations thereof. According to certain embodiments, the at least one polyol according to item (iii) may be selected from 1,2-propanediol, 1,3-propanediol, 1,3-butanediol, 1,4-butanediol, and 2,3-butanediol. In most preferred embodiments, the diol (iii) is selected from 1,2-propanediol.

The thermoplastic polyurethane matrix resin composition contains in preferred embodiments the diol according to item (iii) in an amount of 1 to 30 wt.-%, based on the total weight of the thermoplastic polyurethane matrix resin composition. In more preferred embodiments isocyanate is contained from 5 to 25 wt.-% and in most preferred embodiments from 5 to 15 wt.-%.

According to certain embodiments, the molar ratio of the OH groups of the combined components (i) and (iii) to the NCO groups of said polyisocyanate (ii) is from 2:1 to 1:10, preferably from 2:1 to 1:5, most preferably from 2:1 to 1:2.

The polyurethane matrix resin composition according to the present invention preferably comprises from 0 to 10 wt.-% of at least one auxiliary substance based on the total weight of the two-component polyurethane matrix resin. The at least one auxiliary substances is preferably admixed wholly or partially with the components (i) and (iii). The auxiliary substances can be added in order to modify the properties of the composition, such as for example viscosity, wetting behavior, stability, reaction kinetics, avoidance of bubble formation, storage life or adhesion. Examples of auxiliary substances are leveling agents, wetting agents, catalysts, desiccants and the aforementioned additives for use in the thermoplastic binder.

As catalysts, the polyurethane matrix resin composition can comprise metal organic compounds based on iron, titanium, zirconium, aluminum, lead, bismuth and preferably tin. In a preferred embodiment, the catalysts contain polyhydroxy compounds as chelating agents in a molar ratio of 0.25:1 to 2:1 to the metal atoms, said compounds being selected from cyclic α-hydroxyketones and/or triphenols with three adjacent OH groups. The polyhydroxyl compounds used as chelating agents preferably have a number average molecular weight (Mₙ) of less than 500 g/mol or they may also be bound to a support. Substances suitable as chelating agents are in particular those, which optionally comprise a further OH, COOH or ester group. During the crosslinking reaction, said chelating agents may accordingly also react with the polyurethane matrix resin composition and be firmly incorporated into the cured thermosetting polyurethane polymer matrix.

Another group of catalysts, which can be used in the polyurethane matrix resin composition are those based on tertiary amines. As an example, linear or preferably cyclic aliphatic amines can be employed, such as methylcyclohexylamine, dimethylbenzylamine, tributylamine, monoethanolamine, triethanolamine, diethylenetriamine, triethylenetetramine, triethylenediamine, guanidine, morpholine, N-methylmorpholine, diazabicyclooctane (DABCO), 1,8-diazabicyclo-(5,4,0)-undecene-7 (DBU) or diazabicyclononene (DBN).

In a preferred embodiment, the catalyst is contained in a quantity of 0.01 to 5 wt.-% based on the total weight of the polyurethane matrix resin composition.

According to certain embodiments, no pigments, molecular sieves and/or plasticizers are present in the polyurethane matrix resin composition. Furthermore, the polyurethane matrix resin composition preferably contains no organic solvents.

According to various embodiments, fillers, for example in the form of nanoparticles, may be added in order to modulate toughness and/or viscosity of the polyurethane matrix resin composition.

In particularly preferred embodiment, the polyurethane matrix resin composition should contain no amine-containing components.

In a preferred embodiment, the cured thermoplastic polyurethane matrix preferably has a glass transition temperature (Tg) of above 60°C (measured by DSC, DIN 11357), more preferably from 100 to 150°C, most preferably from 125 to 135, and a modulus of elasticity of more than 1000 MPa at temperatures of between -10°C and +70°C (in line with DIN EN ISO 527).

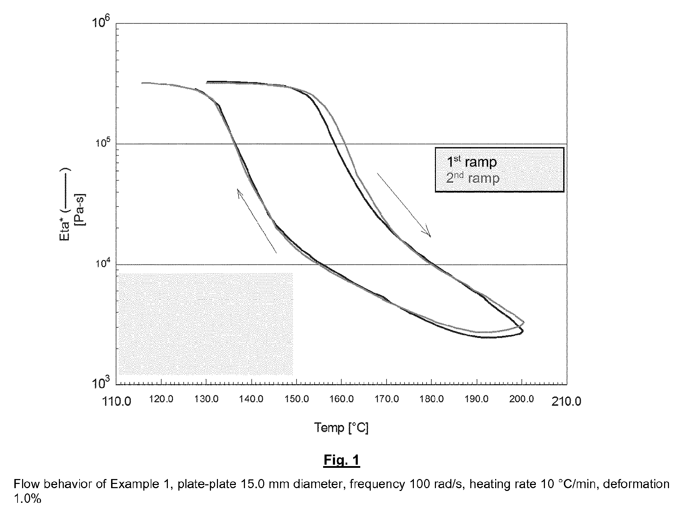

Figure 1 depicts the flow behavior of Example 1 of the present invention. (plate-plate 15.0 mm diameter, frequency 100 rad/s, heating rate 10 °C/min, deformation 1.0%)

The present invention also relates to a composite, which comprises a cured thermoplastic polyurethane polymer matrix according to the present invention and a fiber material, wherein the cured thermoplastic polyurethane polymer matrix is used as a reinforcing binder. In preferred embodiments, the fiber material is contained in proportions of more than 30 vol.-%, based on the total volume of said fiber-reinforced composite. In more preferred embodiments, the fiber material is contained in 30 to 65 vol.-%, most preferred in 40 to 55 vol.-%, based on the total volume of said fiber-reinforced composite.

The fiber weight fraction can be experimentally determined, for example by the ignition loss method (ASTM D2854) or the matrix digestion method (ASTM D3171). The vol.-% of carbon fibers can preferably be measured according to DIN EN 2564:1998-08 in case of glass fibers preferably DIN EN ISO 1172:1998-12 can be employed. For unidirectional composites containing electrically conductive fibers (such as carbon) in a non-conductive matrix, the fiber volume fraction can be determined directly by comparing the electrical resistivity of the composite with that of fibers (ASTM D3355).

The fiber material contains preferably fibers selected from glass fibers, synthetic fibers, carbon fibers, boron fibers, ceramic fibers, metal fibers, natural fibers and combinations thereof, most preferably glass fibers, carbon fibers and combinations thereof. Specific examples of the respective category of fibers are disclosed in A.R. Bunsell, J. Renard "Fundamentals of Fibre Reinforced Composite Materials", CRC Press 2005, ISBN 0750306890. Examples for synthetic fibers include polyester fibers, polyethylene fibers, polypropylene fibers, polyamide fibers, like polyamide 6 or polyamide 6.6, polyimine fibers, poly (methyl methacrylate) and aramid fibers. Ceramic fibers include oxide and non-oxide ceramic fibers like aluminum oxide/ silicon dioxide fibers, basalt fibers and carbon silicide fibers. Examples of metal fibers are steel, stainless steel or aluminum fibers. Examples of natural fibers are wood fibers, sisal fibers, flax fibers, hemp fibers, coconut fibers, banana fibers and jute fibers.

The fiber material can preferably be in the form of a mat, like a continuous fiber mat or a chopped strand mat, woven fabric, nonwoven fabric, non-crimped fabric, knitted fabric, plies, or roving.

In preferred embodiments, two or more of the forms of the fiber material can be employed. These forms can comprise one or more of the above described fibers, respectively.

The length of the fibers can be 0.1 to 1 mm, 1 to 50 mm or above 50 mm. In preferred embodiments the fiber length is above 50 mm, more preferably above 500 mm, most preferably the fiber is "endless", i.e. the fiber is a continuous fiber. Endless fibers or continuous fibers are employed in continuous fiber mats for the manufacture of endless fiber-reinforced composites, in particular endless fiber reinforced plastics. "Continuous" or "endless" means that the fibers reach from one end of the fiber mat to another, such that the fiber ends are located at the outer edges of the fiber mat and not inside the fiber mat. This improves the mechanical properties of the fiber-reinforced composites.

In a preferred embodiment, glass or carbon fibers having a length of above 500 mm are employed, more preferably these fibers are in the form of mats, nonwoven fabric and non-crimped fabric or combinations thereof.

The fiber-reinforced composite may further comprise a binder. Formulations of binders suitable for application in this context are well known in the art and may be selected from the group consisting of, as non-limiting examples thereof, thermosetting or thermoplastic binder compositions. Preferably, the binder is a thermoplastic polyurethane based binder in the form of a reaction product of at least one isocyanate, at least one polyol, such as a polyester and/or polyether-based polyol, and optionally one or more diol(s). The binder may further comprise additives, such as dyes, fillers (e.g., silicates, talcum, calcium carbonates, clays or carbon black), thixotropic agents (e.g., bentones, pyrogenic silicic acids, urea derivatives, fibrillated or pulp short fibers), color pastes and/or pigments, conductivity additives (e.g., conductivity carbon blacks or lithium perchlorate), plasticizers, tackifiers, other thermoplastic polymers, stabilizers, adhesion promoters, rheological additives, waxes, etc. Optionally, a binder suitable for application in this context may further comprise fibers, which may be selected from the aforementioned fiber materials.

The present invention also provides a method for the manufacture of fiber-reinforced composites, comprising the steps:
1) providing an external mold comprising the fiber material;
2) introducing the polyurethane matrix resin composition into said mold under pressure and/or vacuum; and
3) curing said composition at a temperature of up to 140 °C, preferably from 60 to 120 °C.

In step 1) of said method, a fiber material in combination with a suitable binder may be used.

The method for manufacture of fiber-reinforced composites comprises injection and infusion methods or combinations thereof. In particular, the method according to the invention comprises two embodiments. Inflow may be carried out rapidly by injection under pressure (Resin Transfer Molding or also RTM method), optionally also with vacuum assistance (VARTM). The preferred polyurethane matrix resins employed in the RTM method have a short open time, but thereafter exhibit a rapid reaction. In another embodiment, the mold is filled by application of a vacuum (infusion method). In this embodiment, a long open time is advantageous. Preferably, the viscosity of the polyurethane matrix resin is low and may increase only slightly under the method conditions of mold filling. Care must be taken to ensure that the flow rate is selected such that air or gases can escape from between the fiber materials.

In case of the infusion method, a long open time is preferred, for which reason the polyurethane matrix resin should preferably contain no catalysts. Alternatively, retarded or temperature activated catalysts can be used. Inflow onto the fiber materials, displacement of air bubbles and mold filling may be carried out over an extended period. Due to the slow progress of the reaction, the fiber materials can be completely embedded in the matrix material.

In case of the RTM method, mold filling proceeds in a short time. The polyurethane matrix resin is introduced into the mold under pressure. The low initial viscosity ensures that the fibers are rapidly embedded. In this embodiment, the compositions preferably also contain catalysts. After a short time, the latter accelerate the reaction and curing therefore proceeds rapidly. This may also be assisted by an elevated temperature. A short residence time in the mold is then possible.

Since formation of macromolecules begins after mixing, it is convenient either for only the required quantities of the polyurethane matrix resin mixture to be produced and directly processed or, in another approach, the polyurethane matrix resin is produced continuously and introduced into the mold.

Once the mold has been filled, the polyurethane matrix resin begins to cure. This may proceed without additional heat. The heat of reaction arising from the formation of macromolecules does not result in localized overheating of the substrates. The filled mold may be heated in order to accelerate the crosslinking reaction. It may be heated to temperatures of up to 140°C, preferably 60 to 120 °C, so ensuring faster reaction rates. The mold can thus be removed sooner from the molded part and is then available for further working operations.

Acceleration of curing may be achieved by targeted temperature control of the method and not necessarily by the choice of the polyurethane matrix resin. Due the composition of the invention, a fiber-reinforced composite can be produced, which shows less defects, an improved mechanical strength, and allows for post-cure shape modification due to the thermoplastic properties of the cured polyurethane matrix resin.

The composition according to the present invention and the fiber-reinforced composite according to the present invention can be used in railway vehicles, automotive vehicles, aircraft vehicles, boats, space vehicles, motorbikes, bicycles, sporting goods, e.g., skis, snowboards, rackets, golf clubs, fishing rods, baseball bats, hockey sticks, arrows, archery bows, surfboards, and javelins, exercise equipment, cell phone and laptop housings, helmets, functional clothing, shoes, construction parts in bridges and buildings or wind turbine blades.

### Examples

The following measurement methods are employed in the present invention if not explicitly stated otherwise.

Example 1: Thermoplastic polyurethane matrix resin composition

| **No.** | **Raw material** | **Equivalent weight [g/eq]** | **Equivalent [eq]** | **Weighed portion [g]** | **Mass fraction [%]** |
|---|---|---|---|---|---|
| **1** | 4,8-bis(hydroxymethyl)tricyclo-[5.2.1.02,6]decane | 98.15 | 0.10 | 9.82 | 25 |
| **2** | 1,2-propanediol | 38.05 | 0.10 | 3.81 | 10 |
| **3** | mixture of 4,4'-MDI and 2,4-MDI | 125.0 | 0.18 | 22.50 | 58 |
| **4** | mixture of isomers of MDI and polymeric MDI with 11.5 % polymer-MDI | 128.8 | 0.02 | 2.58 | 7 |
| **Total** | | | | 38.71 | 100 |

Example 2: Thermoplastic polyurethane matrix resin composition

| No. | **Raw material** | **Equivalent weight [g/eq]** | **Equivalent [eq]** | **Weighed portion [g]** | **Mass fraction [%]** |
|---|---|---|---|---|---|
| **1** | 4,8-bis(hydroxymethyl)tricyclo-[5.2.1.02,6]decane | 98.15 | 0.10 | 9.82 | 25 |
| **2** | 1,2-propanediol | 38.05 | 0.10 | 3.81 | 10 |
| **3** | mixture of 4,4'-MDI and 2,4-MDI | 125.0 | 0.20 | 25.00 | 65 |
| **Total** | | | | 38.63 | 100 |

Example 3: Thermoplastic polyurethane matrix resin composition

| **No.** | **Raw material** | **Equivalent weight [g/eq]** | **Equivalent [eq]** | **Weighed portion [g]** | **Mass fraction [%]** |
|---|---|---|---|---|---|
| **1** | 4,8-bis(hydroxymethyl)tricyclo-[5.2.1.02,6]decane | 98.15 | 0.10 | 9.82 | 25 |
| **2** | 2,3-butanediol | 45.06 | 0.10 | 4.51 | 11 |
| **3** | mixture of 4,4'-MDI and 2,4-MDI | 125.0 | 0.20 | 25.00 | 64 |
| **Total** | | | | 39.33 | 100 |

Non-inventive example 4: Thermoplastic polyurethane matrix resin

| **No.** | **Raw material** | **Equivalent weight [g/eq]** | **Equivalent [eq]** | **Weighed portion [g]** | **Mass fraction [%]** |
|---|---|---|---|---|---|
| **1** | 1,2-propanediol | 38.05 | 0.20 | 7.61 | 23 |
| **2** | mixture of 4,4'-MDI and 2,4-MDI | 125.0 | 0.18 | 22.50 | 69 |
| **3** | mixture of isomers of MDI and polymeric MDI with 11.5 % polymer-MDI | 128.8 | 0.02 | 2.58 | 8 |
| **Total** | | | | 32.69 | 100 |

Non-inventive example 5: Thermoplastic polyurethane matrix resin

| **No.** | **Raw material** | **Equivalent weight [g/eq]** | **Equivalent [eq]** | **Weighed portion [g]** | **Mass fraction [%]** |
|---|---|---|---|---|---|
| **1** | 4,8-bis(hydroxymethyl)tricyclo-[5.2.1.02,6]decane | 98.15 | 0.20 | 19.63 | 44 |
| **2** | mixture of 4,4'-MDI and 2,4-MDI | 125.0 | 0.20 | 25.00 | 56 |
| **Total** | | | | 44.63 | 100 |

Non-inventive example 6: Thermoplastic polyurethane matrix resin

| **No.** | **Raw material** | **Equivalent weight [g/eq]** | **Equivalent [eq]** | **Weighed portion [g]** | **Mass fraction [%]** |
|---|---|---|---|---|---|
| **1** | 4,8-bis(hydroxymethyl)tricyclo-[5.2.1.02,6]decane | 98.15 | 0.10 | 9.82 | 25 |
| **2** | 1,2-propanediol | 38.05 | 0.10 | 3.81 | 10 |
| **3** | mixture of isomers of MDI and polymeric MDI with 11.5 % polymer-MDI | 128.8 | 0.20 | 25.76 | 65 |
| **Total** | | | | 39.39 | 100 |

Comparison of glass transition temperatures, melt properties, injection properties and miscibility

| **Example** | **Glass transition [°C]** | **Meltable** | **Infusability** | **Miscibility** |
|---|---|---|---|---|
| **1** | 136 | Yes | Good | Good |
| **2** | 135 | Yes | Good | Good |
| **3** | 138 | Yes | Good | Good |
| **Non-inventive 4** | 126 | Yes | Good | Bad |
| **Non-inventive 5** | 144 | Yes | Bad | Good |
| **Non-inventive 6** | 151 | No | Good | Good |

## Claims

**1.** A thermoplastic polyurethane matrix resin composition, comprising
(i) at least one bridged and/or fused and/or spiro polycyclic alcohol compound;
(ii) at least one polyisocyanate; and
(iii) at least one diol which, is different from the at least one bridged and/or fused and/or spiro polycyclic alcohol compound (i);
wherein the at least one bridged and/or fused and/or spiro polycyclic alcohol compound (i) is present in the thermoplastic polyurethane matrix resin composition in an amount of at least 10 wt.-% by weight, preferably at least 20 wt.-%, most preferably at least 25 wt.-%.

**2.** The composition according to claim 1, wherein the at least one bridged and/or fused and/or spiro polycyclic alcohol compound (i) is 4,8-bis(hydroxymethyl)tricyclo-[5.2.1.02,6]decane.

**3.** The composition according to claim 1 or 2, wherein the molar ratio of the OH groups of the combined components (i) and (iii) to the NCO groups of said polyisocyanate (ii) is from 2:1 to 1:10, preferably from 2:1 to 1:5, most preferably from 2:1 to 1:2.

**4.** The composition according to any of claims 1 to 3, wherein at least one polyisocyanate is selected from the group consisting of 4,4'-diphenylmethanediisocyante, 2,4-diphenylmethanediisocyante, polymeric 4,4'-diphenylmethanediisocyante, polymeric 2,4-diphenylmethanediisocyante, and mixtures of the aforementioned.

**6.** The composition according to any one of claims 1 to 5, wherein the at least one diol (iii) comprises at least a primary and a secondary OH group and/or wherein the at least one diol (iii) comprises at least two secondary OH groups and/or wherein the at least one diol (iii) comprises at least two primary OH groups.

**7.** The composition according to any one of claims 1 to 6, wherein the thermoplastic polyurethane matrix resin composition further comprises at least one catalyst.

**8.** A fiber-reinforced composite comprising a cured thermoplastic polyurethane matrix resin composition according to any one of claims 1 to 7 and a fiber material, **characterized in that** fiber material is contained in proportions of more than 30% by volume based on the total volume of said fiber-reinforced composite.

**9.** A method for the manufacture of fiber-reinforced composites according to claim 8, comprising the steps:
1) providing an external mold comprising the fiber material;
2) introducing the thermoplastic polyurethane matrix resin composition according to any one of claims 1 to 7 into said mold under pressure and/or vacuum; and
3) curing said composition at a temperature of up to 140 °C, preferably from 60 to 120 °C.

**10.** Use of the composition according to any one of claims 1 to 7 or the fiber-reinforced composite according to claim 8 in railway vehicles, automotive vehicles, aircraft vehicles, boats, space vehicles, motorbikes, bicycles, sporting goods, exercise equipment, cell phone and laptop housings, helmets, functional clothing, shoes, construction parts in bridges and buildings or wind turbine blades.
